# EUROPEAN PATENT APPLICATION

(11) **EP 4 417 851 A1**
(43) Date of publication of application: **21.08.2024**
(21) Application number: 24156418.6
(22) Date of filing: 07.02.2024
(51) Int. Cl.: F16L 33/00

(54) **THERMALLY ADAPTIVE PIPE CONNECTORS**

(30) Priority: 15.02.2023 US 202318169534
(71) Applicant: Hamilton Sundstrand Corporation, Charlotte, NC 28217-4578 (US)
(72) Inventor: KILCHYK, Viktor, Lancaster (US); MERRITT, Brent J., Southwick (US)
(74) Representative: Dehns

(57) **Abstract**

A pipe connector (40)includes a connecting structure configured to secure a first section of hose, pipe, or tube (72) to an adjacent second section of hose, pipe, or tube (74) positioned adjacent to the first section at a joint between the first section and the second section. The connecting structure includes at least one segment of a thermally adaptive material. The at least one segment is configured to undergo a shape change as a result of thermal cycling such the shape change causes the connecting structure to form a leak-free seal between the first section and the second section at the joint.

## Description

### TECHNICAL FIELD

The present disclosure relates generally to pipe connectors and in particular to pipe connectors used in variable thermal environments.

### BACKGROUND

Pipe connectors are routinely used to connect sections of hose, piping, or tubing to adjacent sections by applying a load, often a compression load, at a joint between adjacent sections of hose, piping, or tubing. When used in variable thermal environments, i.e., environments subject to significant changes in temperature, pipe connectors may thermally expand (or contract) as a result of the thermal expansion properties of which the pipe connectors are made. Such thermal expansion can cause the pipe connectors to lose the load required to maintain a secure connection between adjacent sections of hose, piping, or tubing.

### SUMMARY

According to one aspect of the present invention, a pipe connector includes a connecting structure configured to secure a first section of hose, pipe, or tube to an adjacent second section of hose, pipe, or tube positioned adjacent to the first section at a joint between the first section and the second section. The connecting structure includes at least one segment of a thermally adaptive material. The at least one segment is configured to undergo a shape change as a result of thermal cycling such the shape change causes the connecting structure to form a leak-free seal between the first section and the second section at the joint.

According to another aspect of the present invention, a clamp-type pipe connector includes a connecting structure configured to slip over a joint formed between a first section of hose, pipe, or tube and an adjacent second section of hose, pipe, or tube. The connecting structure includes at least one segment of a thermally adaptive material. The at least segment is configured to undergo a shape change in a hoop direction as a result of thermal cycling such that the shape change causes the connecting structure to form a leak-free seal between the first section and the second section.

According to yet another aspect of the present invention, a twin ferrule tube fitting includes a connecting structure having a fitting body and a front ferrule configured to slip onto a first section first section of hose, pipe, or tube and a back ferrule and a nut configured to slip onto a second section of hose, pipe, or tube positioned adjacent to the first section forming a joint between the first section and the second section. The connecting structure is configured to secure the first section to the second section when the nut and fitting body are fastened to each other such that the front ferrule is compressed against the first section and the back ferrule is compressed against the second section. At least one of the nut, fitting body, front ferrule and back ferrule is made from a thermally adaptive material that is configured to undergo a shape change in a hoop direction as a result of thermal cycling such that the shape change causes the connecting structure to form a leak-free seal between the first section and the second section.

### BRIEF DESCRIPTION OF THE DRAWINGS

Fig. 1 is a perspective view of a prior art clamp.
Fig. 2 is an exploded view of a prior art twin ferrule tube fitting.
Fig. 3A is a two layer structure in which each layer has a different coefficient of thermal expansion.
Fig. 3B is the two layer structure of Fig. 3A showing the layers deforming independently when thermally cycled.
Fig. 3C is the two layer structure of Fig. 3A showing the layers deforming together when thermally cycled.
Figs. 4A-4C are schematics of pipe connectors having two, three, and four sections made from a thermally adaptive material.
Figs. 5A-5D are schematics of pipe connectors of various shapes having sections made from a thermally adaptive material.
Fig. 6A shows another pipe connector made from a thermally adaptive material in a first thermal state.
Fig. 6B shows the pipe connector of Fig. 6A in a second thermal state.
Fig. 7 shows a first section of hose, pipe, or tube connected to a second section of hose, pipe, or tube by a pipe connector at a joint between the first section and second section.

### DETAILED DESCRIPTION

Pipe connectors are routinely used to connect sections of hose, piping, or tubing to adjacent sections by applying a load, often a compression load, at a joint between adjacent sections of hose, piping, or tubing. Common types of pipe connectors include clamp-style pipe connectors and twin ferrule-type connectors. Many other types of pipe connectors are known in the art. One common challenge of prior art pipe connectors is that they tend to expand (or contract) when used in variable thermal environments, i.e., environments subject to significant changes in temperature. One such example of a variable thermal environment is one in which cryogenic materials are used. Such an environment features a dramatic difference between non-operating conditions (e.g., ordinary environmental ambient conditions) and operating conditions (e.g., very cold cryogenic conditions). The expansion characteristics of pipe connectors, which are a result of the thermal expansion properties of which the pipe connectors are made, may limit the applications for which they can be used because undesirable thermal expansion can cause the pipe connectors to lose the load required to maintain a secure connection between adjacent sections of hose, piping, or tubing.

Making at least part of such a pipe connector from a thermally adaptive material can address the problem of loss of load required to maintain a secure connection between adjacent sections of hose, piping, or tubing. In the context of this disclosure a "thermally adaptive material" means a material that changes shape with thermal cycling (i.e., a change in temperature) to maintain clamping load in a variable thermal environment. As described further below, the thermally adaptive material can include two or more layers with different coefficients of thermal expansion (CTE) that deform differently with thermal cycling. Different CTEs may be achieved using two different material types (which can be metals, polymers, or any other material suitable for a particular application) that inherently have different CTEs or the same material with metallic, carbon, fibers (e.g., Kevlar fibers), of other additives that alter the material's CTE. Alternately, the thermally adaptive material can include a first material having a first CTE dispersed in a matrix of a second material having a second CTE. The thermally adaptive material may manufactured using additive manufacturing techniques (e.g., 3D printing). Other types of thermally adaptive materials also fall within the scope of this disclosure.

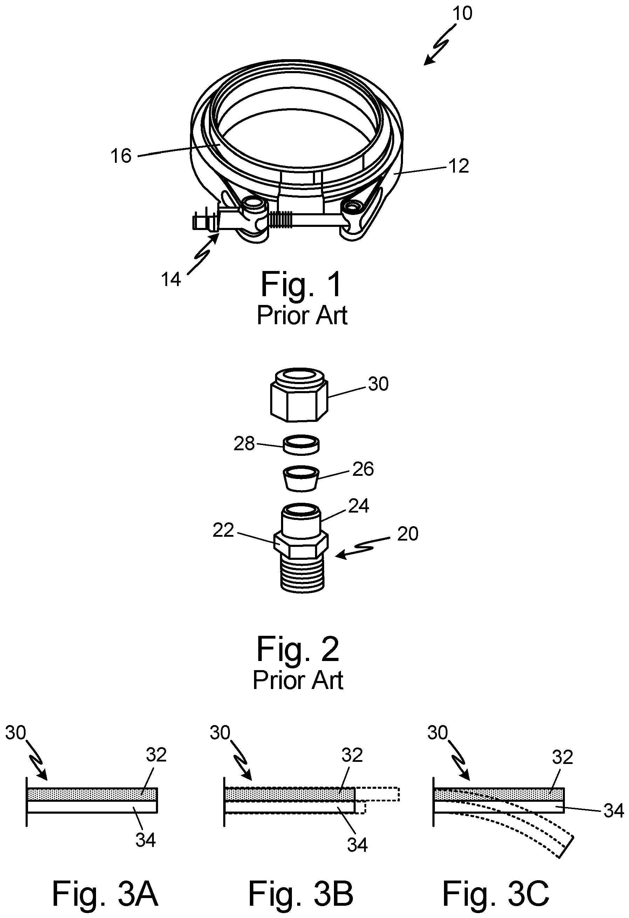

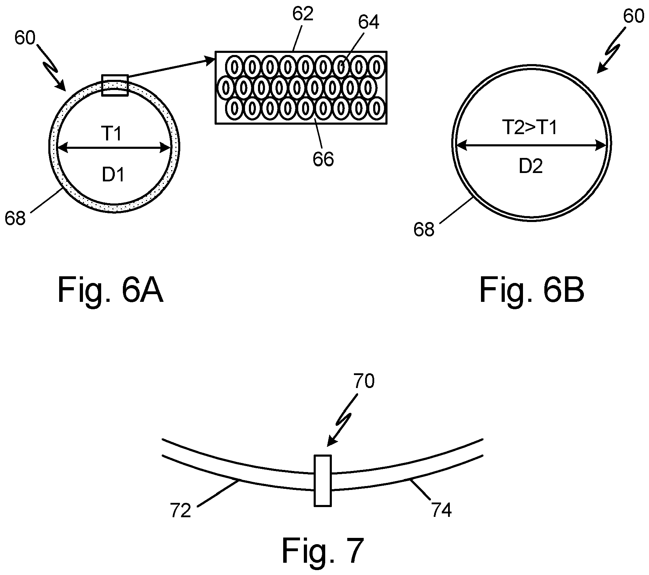

Fig. 1 is a perspective view of a prior art pipe connector, in this case a clamp **10** that includes a compression band **12** (which can also be referred to generically as a connecting structure) that can be tightened with clamp mechanism **14.** The compression band **12** is configured to fit over a hose or tube (not shown; but see Fig. 7) that is often inserted into a rigid shank (not shown) that forms a part of an adjacent hose, pipe, or tube, creating a joint (not shown) between the two adjacent sections of hose, pipe, or tube. In some applications compression band **12** is supplemented by a metallic or polymeric secondary compression band **14** that fits between the hose, tube or shank. The secondary compression band **14** may be a single piece or may comprise multiple (i.e., two or more) pieces. As is well known in the art, the materials used to make the clamp **10** should be selected to be compatible with the application for which the clamp **10** is intended. Similarly, the size and construction of the compression band **12,** secondary compression band **16,** and clamp mechanism **14** should be selected to be compatible with the application for which the clamp **10** is intended. The depiction of the particular pipe connector (clamp **10)** shown in Fig. 1 is not intended to limit the scope of this disclosure in any way. It is merely intended to illustrate one of many options well known in the art for constructing such a pipe connector. A person of ordinary skill knowledgeable about such pipe connectors will recognize that the pipe connectors that are the subject of this disclosure can encompass a wide range of pipe connector designs.

Fig. 2 is an exploded view of another type of prior art pipe connector, a twin ferrule tube fitting **20** that includes a fitting body **22** with threads **24,** a front ferule **26,** a back ferule **28,** and a threaded nut **30** (which can collectively be referred to generically as a connecting structure). As well known in the art, the fitting body **22** and front ferule **24** slip onto a first section of hose, pipe, or tube (not shown; but see Fig. 7). The back ferule **26** and nut **28** slip onto a second section of hose, pipe, or tube (not shown). When the first section of hose, pipe, or tube is positioned adjected to the second section of hose, pipe, or tube, forming a joint between the first section and second section, the threaded nut **30** engages the threads **24** of fitting body **22.** Threaded nut 28 can be screwed onto the threads **24** of fitting body **22,** compressing the front ferule **26** and back ferule **28** against the first section and second section, respectively, to form a seal between the first section and second section. As is well known in the art, the materials used to make the twin ferrule tube fitting **20** should be selected to be compatible with the application for which the twin ferrule tube fitting **20** is intended. Similarly, the size and construction of the fitting body 22, front ferule **26,** back ferule **28** and threaded nut **30** should be selected to be compatible with the application for which the twin ferrule tube fitting **20** is intended. The depiction of the particular pipe connector (twin ferrule tube fitting **20)** shown in Fig. 2 is not intended to limit the scope of this disclosure in any way. It is merely intended to illustrate one of many options well known in the art for construction such a pipe connector. A person of ordinary skill knowledgeable about such pipe connectors will recognize that the pipe connectors that are the subject of this disclosure can encompass a wide range of pipe connector designs.

Fig. 3A shows one embodiment of a thermally adaptive material that is within the scope of this disclosure--a two layer structure **30** having a first layer **32** and a second layer **34,** each of which has a different coefficient of thermal expansion (CTE). As discussed further below, the first layer **32** and the second layer **34** are configured such that the two layer structure **30** changes shape as a result of temperature changes associated with thermal cycling. As discussed above, the two layers **32, 34** can be made from two different materials (which can be metals, polymers, or any other material suitable for a particular application) that inherently have different CTEs or the same material with metallic, carbon, fibers (e.g., Kevlar fibers), or other additives that alter the material's CTE. Such additives can be dispersed in the material in such a way as to cause the material to change shape in a preferred direction or dimension as a result of thermal cycling. The thermally adaptive material may be manufactured using additive manufacturing techniques (e.g., 3D printing). Although described and shown as having only two layers, a person of ordinary skill will understand that two layer structure **30** may, in fact, have more than two layers (e.g., three layers, four layers, or even more layers) as long as at least two layers have different CTEs. Accordingly, in the context of this disclosure, the term "two layer structure" is not limited to two layer. The term "two layer structure" encompasses structures having two layers, three layers, four layers, or any number of layers as long at least two of the layers have different CTEs.

Fig. 3B shows the two layer structure **30** in which the first layer **32** has a CTE greater than the CTE of the second layer **34.** If the two layers **32, 34** are allowed to deform independently, the first layer **32** grows in a lateral direction to a greater extent than second layer **34** as Fig. 3B shows. If the two layers **32, 34** are constrained to deform together, the two layer structure **30** deflects in the direction of the second layer **32** (shown in Fig. 3C) because the CTE of the second layer **32** is less than the CTE of the first layer **32** (i.e., the first layer **32** grows in a lateral direction to a greater extent than second layer **34** causing deflection in the direction of the second layer **34).**

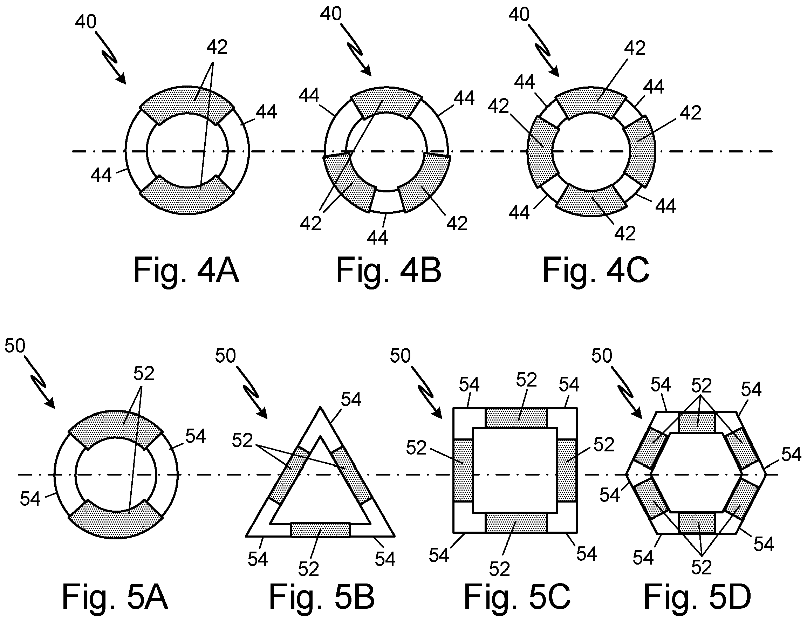

As discussed above, we propose making at least part of a pipe connector from a thermally adaptive material, including a thermally adaptive material similar to that shown in Figs. 3A-3C. Figs. 4A-4C are schematics of pipe connectors **40** of the present disclosure having two (Fig. 4A), three (Fig. 4B), and four (Fig. 4C) sections **42** of a thermally adaptive material along hoop directions. The remaining sections **44** of the pipe connectors **40** may be made from any other material that is compatible with the thermally adaptive material section **42** and appropriate for a particular application. While Figs. 4A-4C show embodiments of pipe connectors **40** including a certain number of sections **42** made from a thermally adaptive material, there is no limit to the number of such sections **42** or the size of each such section **42.** The number and size of sections **42** made from a thermally adaptive material should be selected to be appropriate for a particular application. Similarly the specific thermally adaptive material used for each such section **42** should be selected to be appropriate for a particular application. In some embodiments, each section **42** in a particular pipe connector **40** may be made from the same thermally adaptive material. Alternately, one or more of sections **42** in a particular pipe connector **40** may be made from different thermally adaptive materials. The thermally adaptive materials used for pipe connectors **40** may be a two (or more) layer material similar to that described above and shown in Figs. 3A-3C. In other embodiments, the thermally adaptive materials used for pipe connectors **40** may be a material similar to that described below and shown in Figs. 6A-6B.

The embodiments of pipe connectors **40** shown in Figs. 4A-4C are just schematics that can in practice be any configuration of pipe connector useful for a particular embodiment, including a clamp-type pipe connector similar to that shown in Fig. 1. For example, the pipe connectors 40 depicted in Figs. 4A-4C could be used as a compression band or secondary compression band of a clamp-style pipe connector similar to the clamp shown in Fig. 1. In other embodiments the pipe connectors **40** shown schematically in Figs. 4A-4C can be one or more elements of a twin ferule tube fitting similar to that shown in Fig. 2. For example, the pipe connectors 40 depicted in Figs. 4A-4C could be used as any component, including the front ferrule or back ferrule of a twin ferrule tube fitting shown in Fig. 2. A person of ordinary skill will recognize that the pipe connectors **40** shown schematically in Figs. 4A-4C can also be used for any other configuration of pipe connector useful for a particular embodiment.

Figs. 5A-5D are schematics of pipe connectors **50** of the present disclosure having various shapes: circle (Fig. 5A), triangle (Fig. 5B), square (Fig. 4C) and hexagon (Fig. 4D). Each of the pipe connectors **50** include multiple sections **52** of a thermally adaptive material generally along hoop directions. As with the embodiments of pipe connectors **40** shown in Figs. 4A-4C, the embodiments of pipe connectors **50** shown in Figs. 5A-5D include remaining sections **54** that may be made from any other material that is compatible with the thermally adaptive material section **52** and appropriate for a particular application. While Figs. 5A-5D show embodiments of pipe connectors **50** including a certain number of sections **52** made from a thermally adaptive material, there is no limit to the number of such sections **52** or the size of each such section **52.** The number and size of sections **52** made from a thermally adaptive material should be selected to be appropriate for a particular application. Similarly the specific thermally adaptive material used for each such section **52** should be selected to be appropriate for a particular application. In some embodiments, each section **52** in a particular pipe connectors **50** may be made from the same thermally adaptive material. Alternately, one or more of sections **52** in a particular pipe connector **50** may be made from different thermally adaptive materials. The thermally adaptive materials used for pipe connectors **50** may be a two (or more) layer material similar to that described above and shown in Figs. 3A-3C. In other embodiments, the thermally adaptive materials used for pipe connectors **40** may be a material similar to that described below and shown in Figs. 6A-6B.

The embodiments of pipe connectors **50** shown in Figs. 5A-5D are just schematics that can in practice be any configuration of pipe connector useful for a particular embodiment, including a clamp-type pipe connector similar to that shown in Fig. 1. For example, the pipe connectors 50 depicted in Figs. 5A-5D could be used as a compression band or secondary compression band of a clamp-style pipe connector similar to the clamp shown in Fig. 1. In other embodiments the pipe connectors **50** shown schematically in Figs. 5A-5D can be one or more elements of a twin ferule tube fitting similar to that shown in Fig. 2. For example, the pipe connectors 50 depicted in Figs. 5A-5D could be used as any component, including the front ferrule or back ferrule of a twin ferrule tube fitting shown in Fig. 2. A person of ordinary skill will recognize that the pipe connectors **50** shown schematically in Figs. 5A-5D can also be used for any other configuration of pipe connector useful for a particular embodiment.

Figs. 6A and 6B show another embodiment pipe connector **60** made from a different thermally adaptive material **62** than shown in Figs. 3A-3C. Fig. 6A shows pipe connector **60** in a first thermal state, which is a "cold" state (i.e., "cold" relative to the temperature it experiences during operation). The thermally adaptive material **62** from which pipe connector **60** is made includes a first material **64** having a first CTE dispersed in a matrix of a second material **66** having a second CTE. The first material **64** and second material **66** should be mutually insoluble such that they form distinct phases with distinct properties when formed into the thermally adaptive material **62.** For example, at least one of the first material **64** and second material **66** may be an elastic/flexible material, such as a thermoplastic polymer or photopolymer. Both of the first material **64** and second material **66** may be polymers or one of the first material **64** and second material **66** may be a polymer and the other material may be a filler, such as an organic or inorganic phase. Suitable polymers include polyamides (PA), polystyrenes (PS), thermoplastic elastomers (TPE), polypropylene (PP), and polyaryletherketone (PAEK). Suitable organic or inorganic phases include carbon-based materials (including carbon nanotubes), silica, or any other suitable materials known in the art. The shape and distribution of the first material **64** in the second material **66** may be selected to cause the thermally adaptive material **62** to undergo a uniform shape change in all dimensions. As a result, pipe connector **60** made from such a thermally adaptive material **62** can change from a circular cross-section with a first diameter (D1) at in a first thermal (non-operating) state (T1) (as shown in Fig. 6A) to a circular cross-section with a second diameter (D2) at in a second thermal (operating) state (T2) (as shown in Fig. 6B), where T2 > T1 and D2 > D1. The shape change that pipe connector **60** undergoes between the first thermal state (Fig. 6A) and the second thermal state (Fig. 6B) is due to the thermally adaptive material **62** from which pipe connector **60** is made.

Alternately, the shape and distribution of the first material **64** in the second material **66** may be selected to cause the thermally adaptive material **62** to undergo a non-uniform shape change in selected dimensions. For example, the distribution of the first material **64** in the second material **66** in portion of the pipe connector **60** (e.g., the "top" and "bottom" of the pipe connector **60)** can be selected to create a first CTE and the distribution of the first material **64** in the second material **66** in different portion of the pipe connector **60** (e.g., radially offset by a defined amount, such as 45°, 60°, 90° or any other amount from the "top" and "bottom" of the pipe connector **60)** can be selected to create a different second CTE. As a result, pipe connector **60** made from such a thermally adaptive material **62** with at least two different CTEs can change from a circular cross-section with a first diameter (D1) at in a first thermal (non-operating) state (T1) to a non-circular cross-section (e.g., "oval" shape) at in a second thermal (operating) state (T2). The shape change that pipe connector **60** undergoes between the first thermal state and the second thermal state is due to the thermally adaptive material **62** having at least two different CTEs from which pipe connector **60** is made. A similar approach varying the shape and distribution of the first material **64** in the second material **66** to create zones with different CTEs in a pipe connector **60** can be applied to any type of pipe connector **60** and any shape pipe connector **60,** including but not limited to all of the shapes shown in Figs. 5A-5D.

Fig. 7 shows a first section **72** of hose, pipe, or tube connected to a second section **74** of hose, pipe, or tube by a pipe connector **70** at a joint (not shown because it is "underneath" the pipe connector **70)** between the first section **72** and second section **74.** The pipe connector **70** of Fig. 7 is shown only as a schematic because the pipe connector **70** can be any of the pipe connectors **40, 50, 60** discussed above (including prior art pipe connectors **10** and **30)** or any other configuration of pipe connector useful for a particular embodiment. In all embodiments, thermally cycling pipe connector **70** between an operating state (the second thermal state) and a non-operating state (the first thermal state) results in an element (e.g., a connecting structure) of piping connector **70** forming a leak-free seal between a first section **72** of hose, pipe, or tube (not shown) and a second section **74** of hose pipe, or tube (not shown) that is positioned adjacent to the first section **72.**

The thermally adaptive materials discussed in this disclosure may be metallic or non-metallic materials suited for the intended application (e.g., having required structural and thermal properties). The pipe connectors and thermally adaptive materials described in this disclosure can be made from additive manufacturing, including 3-D printing (including multi-material 3-D printing), techniques that are well known. Of course, such pipe connectors and thermally adaptive materials can be made from any other manufacturing techniques that a person of ordinary skill would deem suitable for a particular application.

A pipe connector, such as a clamp or twin ferrule tube fitting, made from a thermally adaptive material as described in this disclosure provides numerous advantages. Incorporating thermally adaptive material into a piping connector used for an application with large temperature variations (e.g., cryogenic fluids or other applications than include large temperature variations) can improve safety by establishing a leak-free seal between adjacent sections of hose, pipe, or tube at a joint between the sections.

### Discussion of Possible Embodiments

The following are non-exclusive descriptions of possible embodiments of the present invention.

An embodiment of a pipe connector includes a connecting structure configured to secure a first section of hose, pipe, or tube to an adjacent second section of hose, pipe, or tube positioned adjacent to the first section at a joint between the first section and the second section. The connecting structure includes at least one segment of a thermally adaptive material. The at least segment is configured to undergo a shape change as a result of thermal cycling such the shape change causes the connecting structure to form a leak-free seal between the first section and the second section at the j oint.

The pipe connector of the preceding paragraph can optionally include, additionally and/or alternatively, any one or more of the following features, configurations, and/or additional components:

An embodiment in which the thermally adaptive material comprises two layers, each of which has a different coefficient of thermal expansion.

An embodiment of the preceding paragraph in which the connecting structure is configured to undergo a shape change in a hoop direction as a result of thermal cycling.

An embodiment of paragraph [0033] in which the thermally adaptive material comprises a first material having a first coefficient of thermal expansion dispersed in a matrix of a second material having a second coefficient of thermal expansion.

An embodiment of the preceding paragraph in which the connecting structure is configured to undergo a shape change in a hoop direction as a result of thermal cycling.

An embodiment of any preceding paragraph in which the connecting structure is configured as a clamp that slips over the j oint between the first section and second section to secure the first section to the second section when the thermally adaptive material undergoes a shape change as a result of thermal cycling.

An embodiment of any preceding paragraph in which the connecting structure is configured as a twin ferrule tube fitting having a fitting body and a front ferrule configured to slip onto the first section and a back ferrule and a nut configured to slip onto the second section of hose, pipe, or tube, wherein the connecting structure is configured to secure the first section to the second section when the nut and fitting body are fastened to each other such that the front ferrule is compressed against the first section and the back ferrule is compressed against the second section.

An embodiment of a clamp-type pipe connector includes a connecting structure configured to slip over a joint formed between a first section of hose, pipe, or tube and an adjacent second section of hose, pipe, or tube. The connecting structure includes at least one segment comprising a thermally adaptive material and the at least segment is configured to undergo a shape change in a hoop direction as a result of thermal cycling such that the shape change causes the connecting structure to form a leak-free seal between the first section and the second section.

The conduit of the preceding paragraph can optionally include, additionally and/or alternatively, any one or more of the following features, configurations, and/or additional components:

An embodiment of the clamp-type pipe connector in which the thermally adaptive material comprises two layers, each of which has a different coefficient of thermal expansion.

An embodiment of the clamp-type pipe connector in which the thermally adaptive material includes a first material having a first coefficient of thermal expansion dispersed in a matrix of a second material having a second coefficient of thermal expansion.

An embodiment of a twin ferrule tube fitting, including a connecting structure comprising a fitting body and a front ferrule configured to slip onto a first section first section of hose, pipe, or tube and a back ferrule and a nut configured to slip onto a second section of hose, pipe, or tube positioned adjacent to the first section forming a joint between the first section and the second section, wherein the connecting structure is configured to secure the first section to the second section when the nut and fitting body are fastened to each other such that the front ferrule is compressed against the first section and the back ferrule is compressed against the second section. At least one of the nut, fitting body, front ferrule and back ferrule comprises a thermally adaptive material that is configured to undergo a shape change in a hoop direction as a result of thermal cycling such that the shape change causes the connecting structure to form a leak-free seal between the first section and the second section.

The twin ferrule tube fitting of the preceding paragraph can optionally include, additionally and/or alternatively, any one or more of the following features, configurations, and/or additional components:

An embodiment of the twin ferrule tube fitting in which the thermally adaptive material comprises two layers, each of which has a different coefficient of thermal expansion.

An embodiment of twin ferrule tube fitting in which the thermally adaptive material comprises a first material having a first coefficient of thermal expansion dispersed in a matrix of a second material having a second coefficient of thermal expansion.

While the invention has been described and shown with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A pipe connector, comprising:
a connecting structure configured to secure a first section of hose, pipe, or tube to an adjacent second section of hose, pipe, or tube positioned adjacent to the first section at a joint between the first section and the second section;
wherein the connecting structure includes at least one segment comprising a thermally adaptive material and the at least segment is configured to undergo a shape change as a result of thermal cycling such the shape change causes the connecting structure to form a leak-free seal between the first section and the second section at the joint.

2. The pipe connector of claim 1, wherein the thermally adaptive material comprises two layers, each of which has a different coefficient of thermal expansion.

3. The pipe connector of claim 2, wherein the connecting structure is configured to undergo a shape change in a hoop direction as a result of thermal cycling.

4. The pipe connector of claim 1 or 2, wherein the thermally adaptive material comprises a first material having a first coefficient of thermal expansion dispersed in a matrix of a second material having a second coefficient of thermal expansion.

5. The pipe connector of claim 4, wherein the connecting structure is configured to undergo a shape change in a hoop direction as a result of thermal cycling.

6. The pipe connector of any preceding claim, wherein the connecting structure is configured as a clamp that slips over the j oint between the first section and second section to secure the first section to the second section when the thermally adaptive material undergoes a shape change as a result of thermal cycling.

7. The pipe connector of any preceding claim, wherein the connecting structure is configured as a twin ferrule tube fitting having a fitting body and a front ferrule configured to slip onto the first section and a back ferrule and a nut configured to slip onto the second section of hose, pipe, or tube, wherein the connecting structure is configured to secure the first section to the second section when the nut and fitting body are fastened to each other such that the front ferrule is compressed against the first section and the back ferrule is compressed against the second section.

8. A clamp-type pipe connector, comprising:
a connecting structure configured to slip over a joint formed between a first section of hose, pipe, or tube and an adjacent second section of hose, pipe, or tube;
wherein the connecting structure includes at least one segment comprising a thermally adaptive material and the at least segment is configured to undergo a shape change in a hoop direction as a result of thermal cycling such that the shape change causes the connecting structure to form a leak-free seal between the first section and the second section.

9. The clamp-type pipe connector of claim 8, wherein the thermally adaptive material comprises two layers, each of which has a different coefficient of thermal expansion.

10. The clamp-type pipe connector of claim 8 or 9, wherein the thermally adaptive material comprises a first material having a first coefficient of thermal expansion dispersed in a matrix of a second material having a second coefficient of thermal expansion.

11. A twin ferrule tube fitting, comprising:
a connecting structure comprising a fitting body and a front ferrule configured to slip onto a first section first section of hose, pipe, or tube and a back ferrule and a nut configured to slip onto a second section of hose, pipe, or tube positioned adjacent to the first section forming a joint between the first section and the second section, wherein the connecting structure is configured to secure the first section to the second section when the nut and fitting body are fastened to each other such that the front ferrule is compressed against the first section and the back ferrule is compressed against the second section;
wherein at least one of the nut, fitting body, front ferrule and back ferrule comprises a thermally adaptive material that is configured to undergo a shape change in a hoop direction as a result of thermal cycling such that the shape change causes the connecting structure to form a leak-free seal between the first section and the second section.

12. The twin ferrule tube fitting of claim 11, wherein the thermally adaptive material comprises two layers, each of which has a different coefficient of thermal expansion.

13. The twin ferrule tube fitting of claim 11 or 12, wherein the thermally adaptive material comprises a first material having a first coefficient of thermal expansion dispersed in a matrix of a second material having a second coefficient of thermal expansion.
